# EUROPEAN PATENT APPLICATION

(11) **EP 3 499 748 A1**
(43) Date of publication of application: **19.06.2019**
(21) Application number: 17206642.5
(22) Date of filing: 12.12.2017
(51) Int. Cl.: H04B 10/11

(54) **DEVICE AND METHOD FOR ENABLING LIGHT COMMUNICATION OF DATA**

(71) Applicant: Vestel Elektronik Sanayi ve Ticaret A.S., 45030 Manisa (TR)
(72) Inventor: DÖNER, Çagdas, 45030 Manisa (TR)
(74) Representative: Flint, Adam

(57) **Abstract**

A device (30) for enabling light communication of data from a source device (10) to a receiver device (20) has a shutter (34) for selectively blocking light emitted by a light source (40) towards the receiver device (30). The shutter (34) is mounted for reciprocating movement back and forth in the device (30). In a first location, the shutter (34) is able to block light emitted by the light source (40) towards the receiver device (20) and, when in a second location, the shutter (34) does not block light emitted by the light source (40) towards the receiver device (20). The receiver device (20) can obtain the data by demodulating the received light pattern formed by selective blocking of the light by the shutter (34).

## Description

### Technical Field

The present disclosure relates to a device and method for enabling light communication of data.

### Background

Various arrangements for transferring data from one device to another device are known. Some arrangements use a cabled or wired network connection, such as over a wired network using Ethernet or the like. Other arrangements use a wireless network connection such as WiFi or the like. Yet other arrangements use modulated visible light (in so-called visible light communication or VLC). However, not all devices have the necessary functionality or capability of wired or wireless connectivity or VLC, or the environment in which the device is used may mean that wired or wireless connectivity or VLC is not possible or suitable. In the case of VLC in particular, known systems require that the light source itself is controlled to modulate the light that is emitted by the light source, which is not always possible or practical.

### Summary

According to a first aspect disclosed herein, there is provided a device for enabling light communication of data from a source device to a receiver device, the device comprising:
a shutter for selectively blocking light emitted by a light source towards a receiver device, the shutter being mounted for reciprocating movement back and forth in the device, wherein, when in a first location, the shutter is able to block light emitted by a light source towards a receiver device and, when in a second location, the shutter does not block light emitted by a light source towards a receiver device;
a drive arrangement for driving reciprocating movement of the shutter; and
a controller for controlling operation of the drive arrangement;
the controller being arranged to control the drive arrangement to move the shutter to cause the shutter to selectively block light emitted by a said light source in accordance with the data to be communicated from a said source device to a said receiver device, whereby a said receiver device can obtain the data by demodulating the received light pattern formed by selective blocking of the light by the shutter.

Examples of such devices avoid the need to control the light source itself to modulate the light that is emitted by the light source.

The shutter does not have to completely block the light emitted by the light source. For example, it may be sufficient for the shutter to partially block the light. The amount or degree of blocking that is required may depend at least in part on the sensitivity of the light detector of the receiving device.

The light may be visible light. Light of other wavelengths may be used.

In an example, the drive arrangement comprises an electromagnet for driving movement of the shutter.

In an example, the device comprises a wireless communications interface for receiving signals from a source device wirelessly.

In an example, the device comprises a wired communications interface for receiving signals from a source device over a wired connection.

In an example, the device is arranged to receive from a said source device data to be communicated from a said source device to a receiver device, the controller being arranged to modulate the data, to obtain a drive signal in accordance with the modulated data, and to control the drive arrangement to drive reciprocating movement of the shutter in accordance with the drive signal.

In an example, the device is arranged to receive a drive signal from a source device in which the drive signal is modulated in accordance with the data to be sent, and to control the drive arrangement to drive reciprocating movement of the shutter in accordance with the drive signal.

In an example, the modulation is on-off keying modulation.

In an example, the device is the source device.

In an example, the device is the receiver device.

According to a second aspect disclosed herein, there is provided a method of communicating data from a source device to a receiver device, the method comprising:
moving a shutter in a reciprocating back and forth motion to cause the shutter to selectively block light emitted by a light source towards the receiver device in accordance with the data to be communicated from the source device to the receiver device; and
demodulating at the receiver device the received light pattern formed by selective blocking of the light by the shutter to obtain the data.

In an example, the shutter is provided in a device having a controller for controlling movement of the shutter.

In an example, the method comprises:
the source device transmitting to the controller the data to be communicated from the source device to the receiver device; and
the controller modulating the data, obtaining a drive signal in accordance with the modulated data, and causing the shutter to move in accordance with the drive signal.

In an example, the method comprises:
the source device transmitting to the controller a drive signal in which the drive signal is modulated in accordance with the data to be sent; and
the controller causing the shutter to move in accordance with the drive signal.

In an example, the modulation is on-off keying modulation.

In an example, the shutter is driven to move by an electromagnet.

### Brief Description of the Drawings

To assist understanding of the present disclosure and to show how embodiments may be put into effect, reference is made by way of example to the accompanying drawings in which:
Figure 1 shows schematically an example of a source device, a receiver device and a device for enabling light communication of data from the source device to the receiver device; and
Figure 2 shows schematically the representation of data bits by the enabling device of Figure 1.

### Detailed Description

In broad terms, examples of embodiments of the present disclosure enable transfer of data from a source device to a receiver device using light in which the light source itself does not have to be controlled to modulate the light to transfer the data. The light source itself can therefore be simple and simply left "on" or switched "on" when required. Indeed, the light source may for example be the Sun in some examples, though a dedicated light source may be more appropriate in some applications.

Whilst reference is often made herein to a "source device" and a "receiver device", in some examples the same functionality may be provided for each of the devices, such that data can be transferred in both directions between the devices.

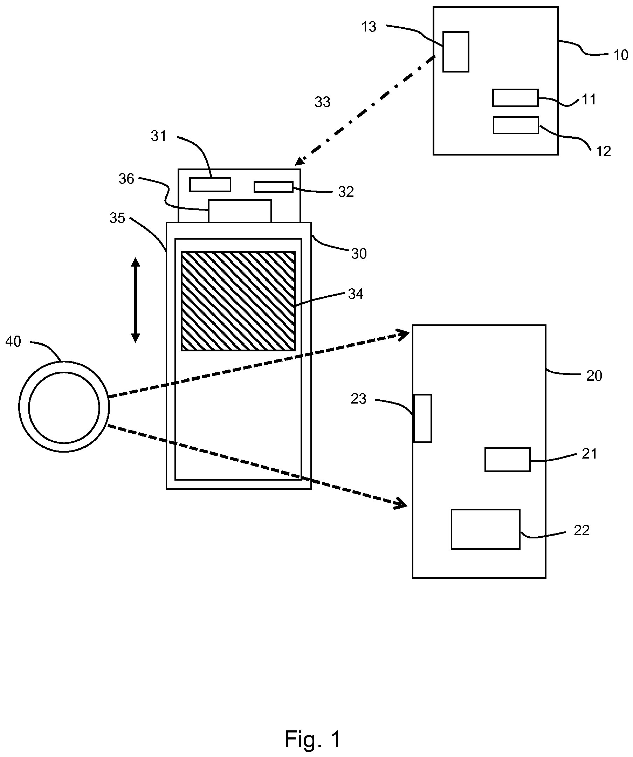

Referring now to Figure 1, there is shown examples of a source device 10, a receiver device 20 and a device 30 (hereafter the "enabling device") for enabling light communication of data from the source device 10 to the receiver device 20. A light source 40 is also shown, emitting light 41 at least towards the receiver device 20. The enabling device 30 is located between the light source 40 and the receiver device 20 so as to be able selectively to block and pass the light 41 emitted towards the receiver device 20, as will be discussed further below.

The enabling device 30 in this example is shown as a discrete device which is separate from both the source device 10 and the receiver device 20. An advantage of this arrangement is that the same enabling device 30 can be used to enable communication from a number of different source devices 10 to one or more receiver devices 20 (typically at different times, though in principle possibly at substantially the same time). In other examples, the enabling device 30 may be associated with or formed integrally with a source device 10 (e.g. as a component of the source device 10). In yet other examples, the enabling device 30 may be associated with or formed integrally with a receiver device 20 (e.g. as a component of the receiver device 20).

Similarly, the light source 40 in the example shown is a discrete light source. In other examples, the light source 40 may be associated with or formed integrally with a source device 10 (e.g. as a component of the source device 10). In the case that the light source 40 is a discrete light source 40, the light source 40 may be the Sun in some applications. In other examples, whether the light source 40 is a discrete light source 40 or is for example associated with or formed integrally with a source device 10, the light source 40 may be for example an electrically powered light source, such as for example an incandescent light bulb or lamp, a fluorescent tube or lamp, an LED (light emitting diode), etc. In general, the light source 40 may emit visible light or light of other, non-visible wavelengths.

The enabling device 30 has a controller, which may be for example a processor, data storage 31, etc. The enabling device 30 has a communications interface 32 which allows the enabling device 30 to receive communications from the source device 10. The communications interface 32 may allow for a wired connection with the source device 10. Alternatively or additionally, the communications interface 32 may allow for a wireless connection 33 with the source device 10. Depending on the specific application and type of connection used, the communications may use for example a serial communications protocol. Depending on the specific application and type of connection used, the communications may use for example UART (Universal Asynchronous Receiver-Transmitter), I²C (Inter-Integrated Circuit), SPI (Serial Peripheral Interface), WiFi, Bluetooth, ZigBee, etc.

The enabling device 30 may have a battery, which may be a rechargeable or non-rechargeable battery, and/or access to some other electrical power supply, such as a mains power supply.

The enabling device 30 has a shutter 34 which is mounted for reciprocating (back and forth) motion. The shutter 34 is opaque, or at least substantially opaque, to the light 41 emitted by the light source 40. The shutter 34 may be mounted on or in rails or grooves or the like (not shown) in a main housing 35 of the enabling device 30 or otherwise arranged to be able to move back and forth. The shutter 34 may in general be formed entirely or partially of for example a plastics or metal material.

The enabling device 30 has a drive arrangement for driving the reciprocating movement of the shutter 34. A number of different possible drive arrangements are possible. For example, the enabling device 30 may have an electric motor that drives movement of the shutter 34 as required, via gears and/or pulleys and/or some linkage arrangement. However, a particularly convenient drive arrangement uses magnetic induction. This is particularly useful as the enabling device 30 may be small (for example, only of a few millimetres or centimetres in size) such that, in turn, the shutter 34 may be small and lightweight. A magnetic drive arrangement can be small and sufficient to drive movement of the shutter 34.

A number of different magnetic drive arrangements are possible. In the example shown, the enabling device 30 has an electromagnet 36. In turn, the shutter 34 may be formed of or contain a portion that is magnetisable, such as a ferromagnetic material (such as cobalt, nickel, iron, Fe₂O₃, etc.). In this example, the electromagnet 36 is located physically above the shutter 34. The electromagnet 36 in such a case may be powered to draw the shutter 34 up and then unpowered to allow the shutter 34 to fall. The shutter 34 may be or have a permanent magnet mounted thereon to facilitate the pulling up of the shutter 34 by the powered electromagnet 36 and which also enables the powered electromagnet 36 to drive the shutter 34 away when the current through the electromagnet 36 is reversed. As an alternative, the electromagnet 36 may be located physically below the shutter 34 and interacts with a permanent magnet portion of the shutter 34 to drive the shutter 34 up and allow the shutter 34 to fall or to pull the shutter 34 towards the electromagnet 36. Having a permanent magnet on the shutter 34, or forming the shutter 34 of a permanent magnet, allows the enabling device 30 to be used in any convenient orientation.

As another example, the electromagnet may be provided on the shutter 34 to interact with a static ferromagnetic or permanent magnet portion of the enabling device 30 to move the shutter 34. This may be useful in some cases, though it does require that the enabling device 30 can power the moving electromagnet when required; this may be achieved via for example wires that can move and flex as the shutter 34 moves or via electrically conductive rails in which the shutter 34 is mounted for movement.

The source device 10 in this example has a processor 11 and data storage 12, which may for example include non-volatile data storage and a volatile memory. The source device 10 has a communications interface 13. The communications interface 13 corresponds to the communications interface 32 of the enabling device 30. The source device 10 may have a number of different types of communications interface 13 so as to be able to communicate with enabling devices 30 that have corresponding different communications interfaces 32. In examples where the enabling device 30 is provided separately of the source device 10, the communications interfaces 13, 32 are most conveniently wireless interfaces to enable wireless communication.

The receiver device 20 in this example has a processor 21 and data storage 22, which may for example include non-volatile data storage and a volatile memory. The receiver device 20 has a light sensor 23 for receiving light emitted by the light source 40. The specific type of light sensor 23 used may depend on the specific light source 40 that is used. The light sensor 23 is sensitive to different levels of incident light intensity, that is, the light sensor 23 is able to provide an output that is a function of the incident light intensity. The light sensor 23 may be for example a photoresistor or light-dependent resistor. In some applications, there may be plural light sensors 23.

In short, when the source device 10 has data to send to the receiver device 20, the source device 10 causes the drive arrangement of the enabling device 30 to move the shutter 34 of the enabling device 30 back and forth in such a way as to effectively modulate the light that is received at the receiver device 20 from the light source 40 in accordance with the data. In particular, as the shutter 34 is moved, the light 41 emitted by the light source 40 towards the receiver device 20 is selectively blocked by the opaque shutter 34 (when the shutter 34 is lowermost in the schematic drawing in Figure 1) or not blocked (when the shutter 34 is uppermost in the schematic drawing in Figure 1). The light sensor 23 of the receiver device 20 detects the differences in light intensity over time and passes corresponding outputs to the processor 21 of the receiver device 20. The processor 21 of the receiver device 20 can then demodulate the varying outputs to obtain the data.

In an example, the receiver device 20 may be arranged so that when light is received, such as when the shutter 34 is moved not to block light, this is taken to mean that a first character is being transmitted, which may for example be treated as a digital **1**; and if no light is received, such as when the shutter 34 is moved to block light, this is taken to mean that a second character is being transmitted, which may for example be treated as a digital **0** (or vice versa).

Accordingly, the source device 20 can effectively transmit data to the receiver device 20 using light but without requiring the light source 40 itself to be controlled to modulate the light that is emitted by the light source 40. The light source 40 can simply be "on", at least when data is to be transmitted. The enabling device 30 controls movement of the shutter 34 selectively to block or pass light in accordance with the data to be transmitted. Magnetic movement of the shutter 34 is of particular advantage as it enables the shutter 34 to be moved quickly and without requiring complex motor drive arrangements.

The light sensor 23 may provide an output corresponding to a "high" light intensity if the received light intensity is above a threshold and may provide an output corresponding to a "low" or no light intensity if the received light intensity is below the threshold. The thresholds may be set manually by a user during some configuration or testing phase. Alternatively or additionally, the thresholds may be set automatically at the receiver device 20 based on the intensity of the ambient light when the enabling device 30 is not operating or present, again during for example some configuration or testing phase.

An indication that data is to be transferred may be provided by providing some specific pattern of light intensity, i.e. some specific movement of the shutter 34, prior to transfer of the data itself, which is known to the receiver device 20.

In the case that the light source 40 can be switched on and off, in an example the source device 20 may first transmit a command to the light source 40 to switch the light source 40 on prior to causing the shutter 34 to be moved as required.

The signal that is sent by the source device 10 to the enabling device 30 may take a number of different basic forms. For example, the source device 10 may be arranged to send a drive control signal to the enabling device 30 in which the drive control signal is generated by the source device 10 in accordance with the control of movement of the shutter 34 that is required in order to cause the required blocking and selective transmission of the light 41 by the shutter 34. As another example, the source device 10 may transmit the data itself to the enabling device 30, and the enabling device 30 then generates the corresponding drive control signal to cause the shutter 34 to move as required. This second example is likely to be more convenient in many cases as it requires less adaptation of source devices 10, which simply need to be able to transmit data in accordance with any appropriate communications control. Either way, the drive control signal is effectively modulated so as to cause the shutter 34 to move in accordance with the data to be transmitted to the receiver device 20.

In an example, the modulation is on-off keying modulation, which is a simple form of amplitude-shift keying (ASK) modulation that can be used to represent digital data. Other, more complex modulation with correspondingly more complex blocking or attenuation of the light 41 may be used in other examples.

The source device 10 may be a user device, such as a computer, smart phone, etc. In other examples, the source device 10 may be an IoT device. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc. IoT devices may be deployed in locations or situations where there is no mains powers supply or the IoT device may not suitable for a mains power supply, including in for example the case that the IoT device is a sensor for temperature, humidity, pressure, light levels, pollution levels, etc.

The receiver device 20 may likewise be a user device, such as a computer, smart phone, IoT device, etc.

As mentioned, the enabling device 30 may be associated with or formed integrally with a source device 10 (e.g. as a component of the source device 10). In such a case, the integrated source device/enabling device 10/30 may have an input device by which a user can manually input data that is to be communicated to a receiver device 20. Such an input device may be for example a keyboard, a touchscreen, etc. The integrated source device/enabling device 10/30 may for example receive text input and convert them to ASCII (American Standard Code for Information Interchange) characters. The shutter 34 may then be caused to move in order to convey the ASCII characters to the receiving device 20. To illustrate this, ASCII codes for the three letters **e, f, g** are shown as Table 1 below:

**Table 1**

| Char | ASCII Decimal | ASCII Hex | ASCII Binary |
|---|---|---|---|
| e | 101 | 0x65 | 01100101 |
| f | 102 | 0x66 | 01100110 |
| g | 103 | 0x67 | 01100111 |

So, for example, to transmit the character e, it is necessary to transmit the eight bits of the byte 01100101 in sequence. To achieve this, in an example the shutter 34 is caused to move such that in successive time slots, the duration of which is known to the receiver device 20, light is blocked by the shutter 34 to convey the first **0,** light is allowed to pass by moving the shutter 34 to convey the first **1,** light is allowed to pass to convey the second **1,** etc.

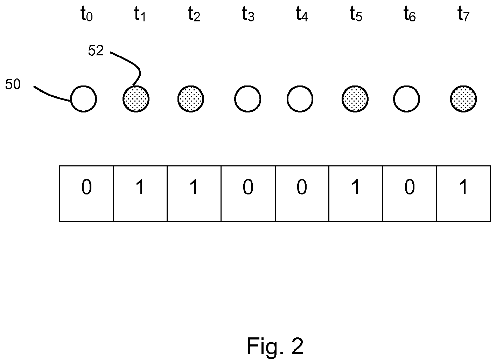

This is illustrated in Figure 2, showing eight time intervals to to t₇ over which the eight bits for the ASCII character **e** are transmitted. At the first time interval to, a **0** is to be transmitted. Accordingly, the shutter 34 of the enabling device 30 is moved as necessary so that light 41 from the source 30 is blocked to convey the first **0** as indicated by an empty circle 50 in the drawing. In the next time interval ti, a **1** is to be transmitted. Accordingly, the shutter 34 of the enabling device 30 is moved as necessary so that light 41 from the source 30 is not blocked to convey the **1** as indicated by a shaded circle 52 in the drawing. This is repeated for the subsequent bits of the byte to be transmitted.

For other characters, such as Turkish or Greek characters or other special characters, two or more bytes may be transmitted, similarly to a UTF-8 (Unicode Transformation Format - 8) system.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A device for enabling light communication of data from a source device to a receiver device, the device comprising:
a shutter for selectively blocking light emitted by a light source towards a receiver device, the shutter being mounted for reciprocating movement back and forth in the device, wherein, when in a first location, the shutter is able to block light emitted by a light source towards a receiver device and, when in a second location, the shutter does not block light emitted by a light source towards a receiver device;
a drive arrangement for driving reciprocating movement of the shutter; and
a controller for controlling operation of the drive arrangement;
the controller being arranged to control the drive arrangement to move the shutter to cause the shutter to selectively block light emitted by a said light source in accordance with the data to be communicated from a said source device to a said receiver device, whereby a said receiver device can obtain the data by demodulating the received light pattern formed by selective blocking of the light by the shutter.

2. A device according to claim 1, wherein the drive arrangement comprises an electromagnet for driving movement of the shutter.

3. A device according to claim 1 or claim 2, comprising a wireless communications interface for receiving signals from a source device wirelessly.

4. A device according to any of claims 1 to 3, comprising a wired communications interface for receiving signals from a source device over a wired connection.

5. A device according to any of claims 1 to 4, the device being arranged to receive from a said source device data to be communicated from a said source device to a receiver device, the controller being arranged to modulate the data, to obtain a drive signal in accordance with the modulated data, and to control the drive arrangement to drive reciprocating movement of the shutter in accordance with the drive signal.

6. A device according to any of claims 1 to 5, the device being arranged to receive a drive signal from a source device in which the drive signal is modulated in accordance with the data to be sent, and to control the drive arrangement to drive reciprocating movement of the shutter in accordance with the drive signal.

7. A device according claim 5 or claim 6, wherein the modulation is on-off keying modulation.

8. A device according to any of claims 1 to 7, the device being the source device.

9. A device according to any of claims 1 to 7, the device being the receiver device.

10. A method of communicating data from a source device to a receiver device, the method comprising:
moving a shutter in a reciprocating back and forth motion to cause the shutter to selectively block light emitted by a light source towards the receiver device in accordance with the data to be communicated from the source device to the receiver device; and
demodulating at the receiver device the received light pattern formed by selective blocking of the light by the shutter to obtain the data.

11. A method according to claim 10, wherein the shutter is provided in a device having a controller for controlling movement of the shutter.

12. A method according to claim 11, the method comprising:
the source device transmitting to the controller the data to be communicated from the source device to the receiver device; and
the controller modulating the data, obtaining a drive signal in accordance with the modulated data, and causing the shutter to move in accordance with the drive signal.

13. A method according to claim 11 or claim 12, the method comprising:
the source device transmitting to the controller a drive signal in which the drive signal is modulated in accordance with the data to be sent; and
the controller causing the shutter to move in accordance with the drive signal.

14. A method according to claim 12 or claim 13, wherein the modulation is on-off keying modulation.

15. A method according to any of claims 10 to 14, wherein the shutter is driven to move by an electromagnet.
